Europäisches Patentamt

European Patent Office

Office européen des brevets

(11) Publication number: **0 147 397**
**B1**

# EUROPEAN PATENT SPECIFICATION

(45) Date of publication of patent specification: **25.05.88**

(51) Int. Cl.⁴: **F 16 H 35/04**

(21) Application number: **83903301.6**

(22) Date of filing: **11.10.83**

(88) International application number:
**PCT/GB83/00256**

(87) International publication number:
**WO 84/01608 26.04.84 Gazette 84/11**

(54) DIFFERENTIAL MECHANISMS.

| | |
|---|---|
| (30) Priority: **14.10.82 GB 8229439** | (73) Proprietor: **MASSEY-FERGUSON SERVICES N.V.**<br>**Abraham de Veerstraat 7A**<br>**Curaçao (AN)**<br>(84) **DE FR SE** |
| (43) Date of publication of application:<br>**10.07.85 Bulletin 85/28** | (73) Proprietor: **Massey-Ferguson Manufacturing Limited**<br>**33/35 Davies Street**<br>**London W1Y 2EA (GB)**<br>(84) **GB** |
| (45) Publication of the grant of the patent:<br>**25.05.88 Bulletin 88/21** | |
| (84) Designated Contracting States:<br>**DE FR GB SE** | (72) Inventor: **BENNETT, John, Sebastian**<br>**Colbourne House Ufton**<br>**Leamington Spa, Warks (GB)** |
| (56) References cited:<br>**DE-B-1 047 635**<br>**FR-A-2 475 660**<br>**GB-A- 291 942**<br>**GB-A-2 083 875**<br>**US-A-2 509 560**<br>**US-A-3 397 593** | (74) Representative: **Jones, David Bryn**<br>**Massey-Ferguson Stareton near Kenilworth**<br>**Warwickshire CV8 2LJ (GB)** |

Courier Press, Leamington Spa, England.

## Description

### Technical Field

This invention relates to vehicle differential mechanisms of the automatic de-clutching type in which drive to one of the two output members of the mechanism is automatically declutched upon overrunning or underrunning of either output member.

### Disclosure of the Invention

Differential mechanisms of this type are well known and examples can be found, for example, in US-A-2329059. To date, such mechanisms have been of a relatively complex and thus expensive construction, for example DE-B-1047635 and GB-A-2083875. FR-A-2475660 also relates to a differential mechanism of this type and US-A-2509560 discloses a differential according to the first part of claim 1.

It is an object of the present invention to provide an improved form of vehicle differential mechanism which is of a relatively simple and reliable construction.

Thus, according to the present invention there is provided a vehicle differential mechanism comprising a rotatable input member for connection with a drive means; a rotatable left hand output member and a rotatable right hand output member for connection with components to be driven by the mechanism, the output members being located co-axially one on each side of the input member; a rotatable left hand clutch member and a rotatable right hand clutch member located coaxially one on each side of the input member between the input member and the left hand and right hand output member respectively and slidable relative thereto in directions parallel to said axis of rotation, each clutch member having separate first and second circumferentially-spaced axially-projecting cam formations for engagement with first and second cam formations on the input and output members respectively, said cam formations being shaped to result in axial diplacement of the clutch member on relative rotation between interengaging cam formations; blocking means for controlling the maximum possible rotational movement of the clutch members relative to the input member; the arrangement being such that when the output members rotate in synchronism the first cam formations force both sets of second cam formations into engagement to transmit drive to each output member from the input member via the first and second cam formations, and when relative rotation occurs between the output members by virtue of their connection with said components, the second cam formations of the faster rotating output member cause axial and rotational displacement of the associated clutch member thus disconnecting drive between the associated first and second cam formations to disconnect drive between the input member and the faster rotating output member, the blocking means controlling the rotational displacement of said clutch member to prevent re-establishment of contact between the disconnected first cam formations whilst relative rotation occurs between the output members; and a torsional friction drive between each clutch member and its associated output member to assist in re-establishing drive to a disconnected output member on re-establishing of synchronous output member rotation, the differential mechanism being characterised in that a friction member is axially slidably connected for rotation with each clutch member, the friction members being disposed coaxially within the clutch members and being spring-biassed axially apart into frictional contact with a corresponding friction surface on the associated output member to provide said torsional friction drive.

One of the main applications for a differential mechanism in accordance with the present invention is as an inter-wheel differential. When used in this application the output members are connected with respective wheels of a vehicle axle so that when the vehicle is driven substantially in a straight line (when the wheels and thus the output members rotate substantially in synchronism) both output members are driven, but when the vehicle makes a turn, the output member connected with the outer wheel of the turn will rotate faster than the other output member so that drive to the outer wheel is disconnected during the turn and the outer wheel simply over-runs.

The above arrangement is particularly compact since the friction members are disposed within the clutch members and is relatively simple and inexpensive to produce.

The blocking means may comprise a blocker member supported co-axially with the clutch members and provided with two series of circumferentially-spaced blocker formations, each respective series of formations engaging a mating set of blocker formations on a respective one of the clutch members, the circumferential spacing between adjacent blocker formations on the blocker member and clutch members limiting the maximum possible relative rotation between the clutch members and hence controlling the maximum possible relative rotation between either clutch member and the input member.

The friction members may conveniently be connected with the blocker formations of the clutch members.

Means are preferably provided for preventing the simultaneous disconnection of drive to both output members.

The invention also provides a vehicle axle including a differential mechanism in accordance with the invention employed as an inter-wheel differential with each output member connected with a respective wheel-driving shaft.

### Description of the Drawings

One embodiment of the present invention, as applied to tractor front axle, will now be described, by way of example only, with reference to the accompanying drawings in which:-

Figure 1 shows a horizontal section through the centre portion of the tractor front axle;

Figure 2 shows the differential mechanism used in the axle of Figure 1 on a larger scale;

Figure 3 shows a side view of the input member of the differential mechanism;

Figure 4 shows a part-section on the line IV-IV of Figure 3.

Figure 5 shows a side view of the clutch member of the differential mechanism;

Figure 6 shows a part-section on the line VI-VI of Figure 5;

Figure 7 is a diametral section through the blocker member of the differential mechanism;

Figure 8 is a diametral section through an output member of the differential mechanism, and

Figures 9 and 10 show, for the purpose of explanation of the operation of the differential mechanism, diagrammatic developments of the differential mechanism in straight-ahead and turn conditions respectively.

Best Mode of Carrying Out Invention

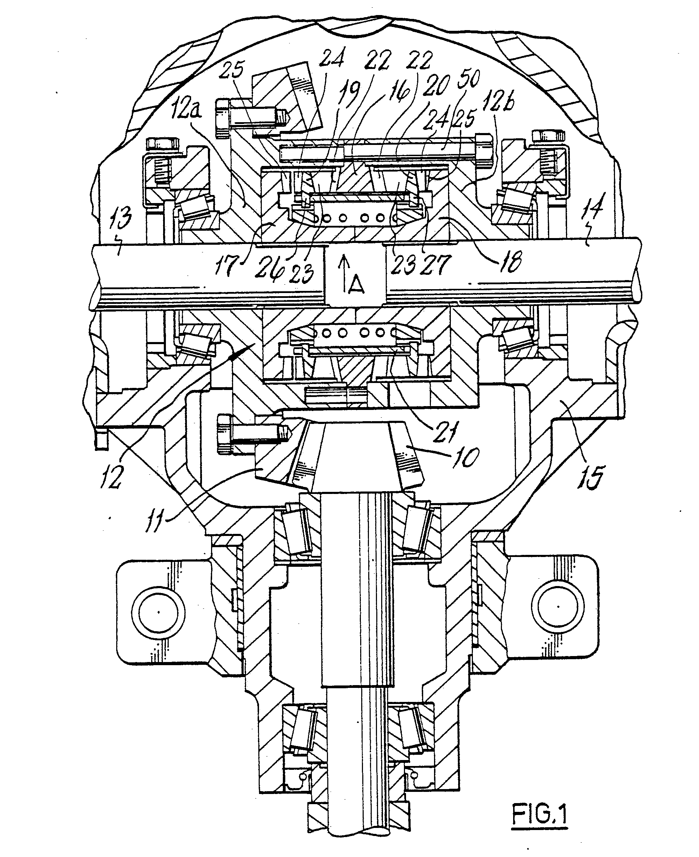

Figure 1 shows the centre portion of a tractor front axle having a casing 15 into which drive is transmitted via a bevel wheel 10 which meshes with a crownwheel 11 which is bolted to a differential housing 12. Drive is transmitted from the differential housing 12 to one or both front wheel drive shafts 13, 14 via a differential mechanism in accordance with the present invention.

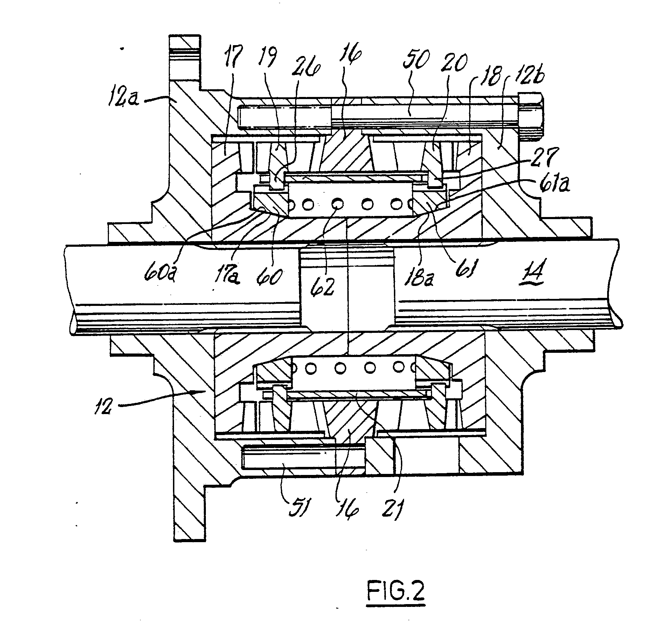

The differential mechanism, shown on a larger scale in Figure 2, has the following main components:-

An input member 16 which bolted between left and right hand parts (12a, 12b) of the differential housing 12 by a series of six circumferentially spaced bolts 50 and a series of six circumferentially spaced dowells 51 which are circumferentially inter-leaved between the bolts;

Left and right hand output members 17 and 18 which are splined onto left and right hand drive shafts 13 and 14 respectively;

Left and right hand clutch members 19 and 20 which, when engaged, transmit drive from the central input member 16 to the left and right hand output members 17 and 18 respectively;

A blocker member in the form of a ring or sleeve 21 which controls the maximum possible relative rotation between clutch members 19 and 20 and hence the maximum possible rotation of either clutch member relative to the input member, and

Friction members 60 and 61 which are splined onto blocker teeth 26 and 27 of clutch members 19 and 20 and have frusto-conical friction surfaces 60a and 61a respectively which are biased into contact with corresponding frusto-conical surfaces 17a and 18a on output members 17 and 18 by a spring 62. Friction members 60 and 61 provide a light friction drive between clutch members 19 and 20 and their respective output members 17 and 18 as will be described below.

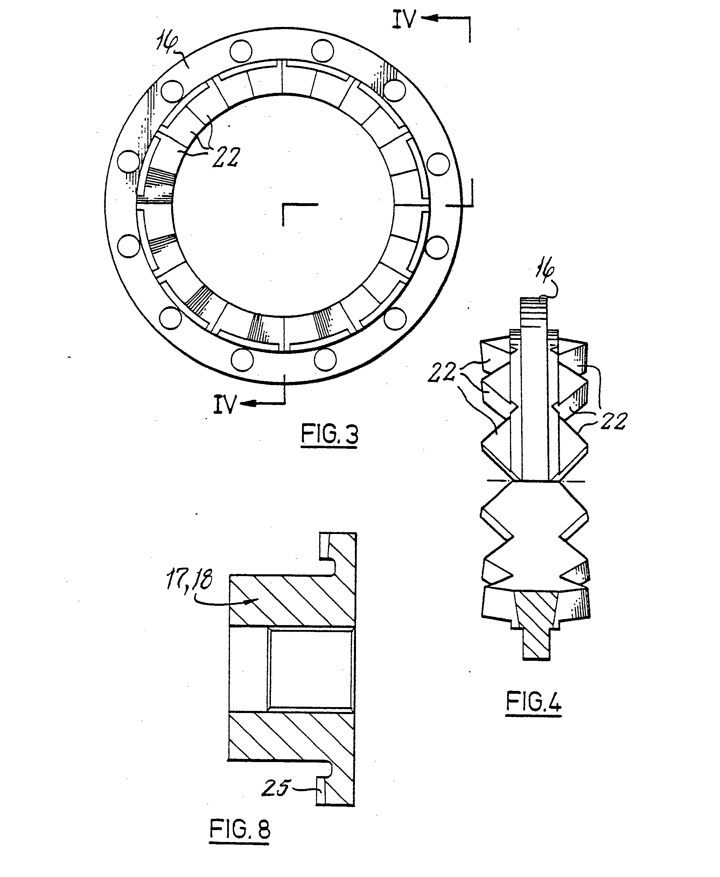

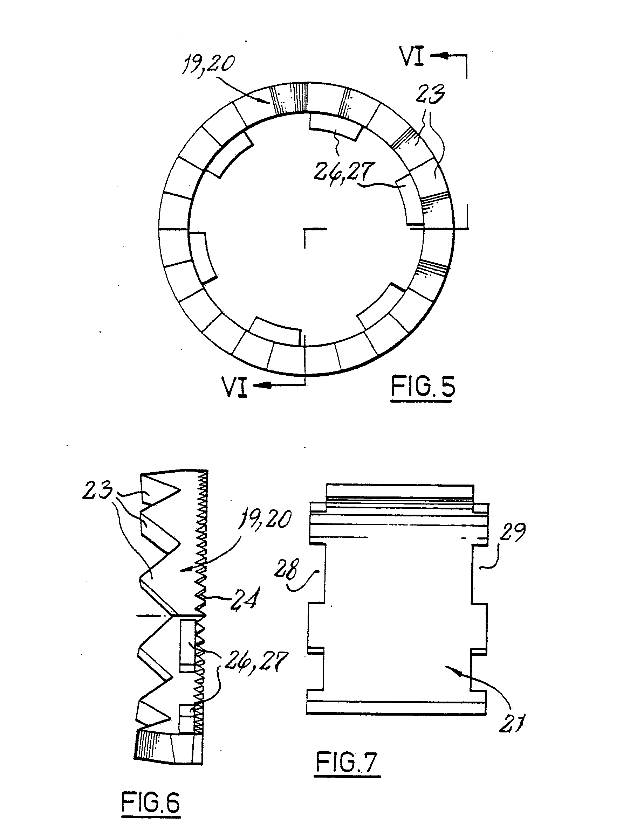

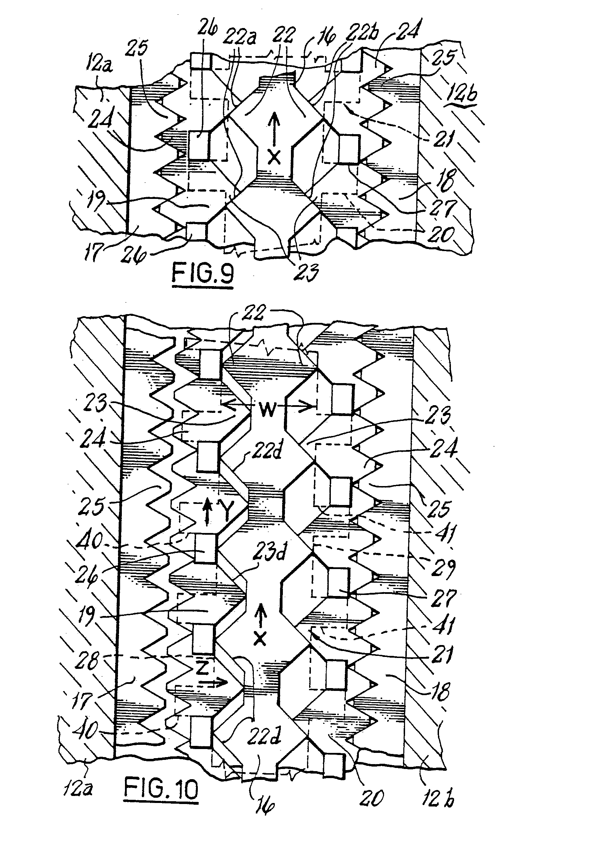

As can be seen from Figures 2, 3 and 4, the input member 16 has cam teeth 22 on each side which are engageable with cam teeth 23 on the adjacent faces of clutch members 19 and 20 shown in Figures 5 and 6. Cam teeth 23 are inclined at approximately 45 degrees to the general planes of rotation of clutch members 19 and 20. The other faces of the clutch members have smaller cam teeth 24 engageable with cam teeth 25 on the output members 17 and 18, shown in Figure 8. Cam teeth 24 are inclined at approximately 60 degrees to the general planes of rotation of clutch members 19 and 20. The angles of cam teeth 23 and 24 ensure that the separating force between the input member 16 and the clutch members 19 and 20 due to a given input torque is greater than the separating force between the clutch members and the output members 17 and 18 for the same torque. This ensures that engagement is maintained between the clutch members and the output members in the driving condition described below.

Each clutch member 19, 20 is also provided on its inside diameter with blocker formations in the form of the blocker teeth 26, 27 respectively for co-operation with two series of blocker formations in the blocker ring 21 in the form of slots 28 and 29 to limit the relative rotational movement possible between the two clutch members as will be described below.

Referring to Figure 9, this shows a diagrammatic development of the view from the inside of the differential mechanism looking radially outwards (i.e., in the direction of arrow A of Figure 1) with the blocker ring 21 shown in dotted detail for clarity and those portions of the output members 17 and 18 radially inward of the blocker ring removed.

Figure 9 shows the normal straight-ahead driving condition in which the differential housing 12 is rotating so that input member 16 moves in effect in direction X. Drive is therefore transmitted via the contact zones 22a and 22b of cam teeth 22 and 23 from input member 16 to both clutch members 19 and 20 and hence via cam teeth 24 and 25 to both output members 17 and 18 and hence both drive shafts 13 and 14. Thus both drive shafts are driven in this condition.

If the vehicle now makes a turn which results in the outside wheel (the left-hand wheel as shown in Figure 10) rotating faster than the inside (righthand) wheel, the contact between input member 16 and clutch member 19 will be lost since the clutch member will tend to rotate in the forward drive direction relative to the input member 16 as indicated by arrow Y.

Rotation in direction Y of clutch member 19 relative to input member 16 is limited by contact between the blocker teeth 26 on clutch member 19 and sides 40 of the slots 28 in blocker ring 21 and by contact between the blocker teeth 27 on clutch member 20 and sides 41 of the slots 29 in blocker ring 21.

When further rotation of clutch member 19 relative to input member 16 is prevented by contact between teeth 26 and the slot sides 40 as described above, the continued rotation of output member 17 due to its connection with the associated wheel causes a cam action between teeth 24 and 25 which results in the axial displacement of clutch member 19 (as indicated by arrow Z) until teeth 24 and 25 are disengaged as shown in Figures 2 and 10. This disengagement of teeth 24 and 25 allows the outer (left-hand) faster rotating wheel to idle, the wheel being driven by its contact with the ground so that it overruns the other wheel until the turn is completed.

The above described limitation of the maximum possible relative rotation between clutch member 19 and input member 16 is arranged to prevent contact between sides 23d of teeth 23 and sides 22d of teeth 22 during a turn (which would cam clutch member 19 outwardly to re-engage teeth 24 and 25).

As will be appreciated, blocker ring 21 and cooperating teeth 26 and 27 directly limit the maximum possible relative rotation between the two clutch members. However, since one of the clutch members always remains in driving engagement with the input member 16 during a turn, the blocker member 21 and teeth 26 and 27 are capable of limiting the maximum possible rotation of either clutch member relative to the input member depending on the direction of the turn.

On completion of the turn the speed differential between output members 17, 18 disappears and the clutch member 19 moves in the opposite direction to arrow Y to re-establish contact with the teeth 22 of input member 16 so that teeth 22 and 23 co-operate to axially displace clutch member 19 in the opposite direction to arrow Z to re-engage teeth 24 and 25 and reconnect drive to output member 17.

It will be noted that the axial distance W (See Figure 10) between the bottoms of the slots 28 and 29 in the blocker ring 21 limits the minimum possible distance between the two sets of blocker teeth 26 and 27 and hence the clutch members to prevent the simultaneous disconnection of drive from both outside members 17 and 18. It will be seen from Figure 10 that with clutch member 19 disconnected from output member 17, the blocker teeth 26 are in contact with the bottoms of slots 28 whilst the axial clearance between the blocker teeth 27 and the bottoms of slots 29 is less than the axial movement of clutch member 20 required to disconnect the drive from output member 18. Thus at least one of the output members is always connected with the input member.

The light friction drive provided between the clutch members 19 and 20 and their respective output members 17 and 18 by the friction members 60 and 61 provides the necessary level of frictional drive in a torsional sense between the clutch members and the output members via surfaces 60a, 17a and 61a, 18a to assist in re-establishing contact between teeth 22 and 23 when a turn is completed whilst allowing the clutch members to move axially without friction.

Thus in operation the differential mechanism will cause one or both wheels to be driven by the crownwheel, but at any time either wheel (but not both) can over-run if the tractor is turning a corner. If the tractor is descending a steep hill, and the transmission is resisting the forward movement, this device will cause one or both wheels to be resisted by the crownwheel, but either wheel can "under-run" when turning a corner.

In the drive condition during a turn only the inside wheel is driven whilst in an overrunning condition during a turn only the outside wheel is resisted.

It will be appreciated from the above that the present invention provides an improved form of vehicle differential mechanism which is of a relatively simple construction and which is reliable in operation. The differential mechanism is compact with the input member 16, clutch members 19, 20, friction members 60, 61 and blocker member 21 all being of annular form and surrounding the central axially-adjacent portions 17b, 18b of the output members with the spring 62 between the blocker member 21 and the central portions 17b, 18b of the output members.

Also since none of the teeth used in the mechanism have re-entrant angles, the toothed components can be produced by forming processes such as casting, forging or sintering without the need for expensive tooth machining.

Although the invention has been described above in relation to a tractor front axle inter-wheel differential, it will be evident that it has wider application. For example, it is also suitable for use as an inter-wheel differential in the rear axle of a four wheel drive vehicle and also as an inter-axle differential.

**Claims**

1. A vehicle differential mechanism comprising a rotatable input member (16) for connection with a drive means; a rotatable left hand output member (17) and a rotatable right hand output member (18) for connection with components (13, 14) to be driven by the mechanism, the output members being located coaxially one on each side of the input member; a rotatable left hand clutch member (19) and a rotatable right hand clutch member (20) located coaxially one on each side of the input member (16) between the input member and the left hand (17) and right hand (18) output member respectively and slidable relative thereto in directions parallel to said axis of rotation, each clutch member having separate first (23) and second (24) circumferentially-spaced axially-projecting cam formations for engagement with first (22) and second (25) cam formations on the input and output members (17, 18) respectively, said cam formations being shaped to result in axial diplacement of the clutch member on relative rotation between interengaging cam formations; blocking means (21, 26, 27) for controlling the maximum possible rotational movement of the clutch members (19, 20) relative to the input member; the arrangement being such that when the output members (17, 18) rotate in synchronism the first cam formations (22, 23) force both sets of second cam formations (24, 25) into engagement to transmit drive to each output member (17, 18) from the input member (16) via the first (22, 23) and second (24, 25) cam formations, and when relative rotation occurs between the output members by virtue of their connection with said components (13, 14) the second cam formations (24, 25) of the faster rotating output member cause axial and rotational displacement of the associated clutch member thus disconnecting drive between the associated first and second cam formations to disconnect drive between the input member and the faster rotating output member, the blocking means (21, 26, 27) controlling the rotational displacement of said clutch members (19, 20) to prevent re-establishment of contact between the disconnected first cam formations (24, 25) whilst relative rotation occurs between the output members; and a torsional friction drive (17a, 18a, 60a, 61a) between each clutch member (19, 20) and its associated output member (17, 18) to assist in re-establishing drive to a disconnected output member on re-establishing of synchronous output member rotation, the differential mechanism being characterised in that a friction member (60, 61) is axially slidably connected for rotation with each clutch member (19, 20), the friction members being disposed coaxially within the clutch members and being spring-biassed (62) axially apart into frictional contact with a corresponding friction surface (17a, 18a) on the associated output member to provide said torsional friction drive.

2. A differential mechanism according to claim 1 characterised in that the friction members (60, 61) and the output members (17, 18) have cooperating frusto-conical friction surfaces (60a, 61a, 17a, 18a).

3. A differential mechanism according to claim 1 or claim 2 characterised in that the blocking means comprises a blocker member in the form of a ring or sleeve (21) supported co-axially within the clutch members (19, 20) and provided with two series of circumferentially-spaced blocker formations (28, 29), each respective series of formations engaging a mating set of blocker formations (26, 27) on a respective one of the clutch members, the circumferential spacing between adjacent blocker formations on the blocker member and clutch members limiting the maximum possible relative rotation between the clutch members and hence controlling the maximum possible relative rotation between either clutch member and the input member.

4. A differential mechanism according to claim 3 characterised in that the blocker formations on the blocker member comprise two series of circumferentially spaced slots (28, 29) and the blocker formations on each clutch member comprise circumferentially-spaced blocker teeth (26, 27) which engage the slots, the relative circumferential extent of the slots and teeth determining the maximum possible relative rotation between the clutch members.

5. A differential mechanism according to claim 3 characterised in that the friction members (60, 61) are connected with the blocker formations (26, 27) of the clutch members (19, 20).

6. A differential mechanism according to any one of claims 1 to 5 characterised in that means (28, 29, 26, 27) are provided for preventing simultaneous disconnection of drive to both output members (17, 18).

7. A differential mechanism according to claims 4 and 6 characterised in that the relative axial extent of the slots (28, 29) in the blocker member (21) and the engaging blocker teeth (26, 27) on the clutch members (19, 20) limits the minimum possible axial spacing (W) between the blocker teeth (26, 27), and thus the clutch members (19, 20), to prevent both clutch members simultaneously disengaging drive to their associated output member (17, 18).

8. A vehicle axle characterised in that a differential mechanism according to any one of claims 1 to 7 is employed as an inter-wheel differential with each output member (17, 18) connected with a respective wheel-driving shaft (13, 14).

**Patentansprüche**

1. Fahrzeugdifferential, bestehend aus einem mit einem Antrieb verbundenen drehbaren Eingangsteil (16); je einem drehbaren linken (17) und rechten Abtrieb (18) zum Koppeln mit von der Einrichtung angetriebenen Bauteilen (13, 14), wobei die Abtriebe koachsial jeweils auf einer Seite des Eingangsteils angeordnet sind; je einem drehbaren linken (19) und rechten Kupplungsteil (20), die koachsial jeweils auf einer Seite des Eingangsteils (16) zwischen diesem und dem linken (17) bzw. rechten (18) Abtrieb angeordnet und relativ dazu in parallel zur Drehachse liegenden Richtungen verschiebbar sind, wobei jeder Kupplungsteil voneinander getrennte erste (23) und zweite (24) am Umfang in Abständen angeordnete und achsial vorstehende Nocken zum Eingriff mit ersten (22) und zweiten (25) Nocken an den Eingangs-bzw. Abtriebsteilen (17, 18) aufweist und die Nocken so gestaltet sind, dass sie bei relativer Drehbewegung zwischen den im Eingriff stehenden Nocken die Kupplungsteile achsial verschieben; einer Verriegelungseinrichtung (21, 26, 27) zur Steuerung der maximal möglichen Drehbewegung der Kupplungsteile (19, 20) relativ zum Eingangsteil; wobei die Anordnung so getroffen ist, dass bei synchroner Drehung der Abtriebe (17, 18) die ersten Nocken (22, 23) beide Gruppen der zweiten Nocken (24, 25) in Eingriff bringen und den Antrieb vom Eingangsteil (16) über die ersten (22, 23) und zweiten (24, 25) Nocken auf beide Abtriebe (17, 18) übertragen und bei auftretender Relativbewegung zwischen den Abtrieben auf Grund ihrer Verbindung mit den Bauteilen (13, 14) die zweiten Nocken (24, 25) des schneller drehenden Abtriebs den zugeordneten Kupplungsteil achsial und drehend verschieben und damit die Antriebsverbindung zwischen den einander zugeordneten ersten und zweiten Nocken lösen, um den Antrieb zwischen dem Eingangsteil und dem schneller drehenden Abtrieb zu trennen, wobei die Verriegelungseinrichtung (21, 26, 27) die drehende Verschiebung der Kupplungsteile (19, 20) steuert, um die Wiederherstellung des Kontaktes zwischen den getrennten zweiten Nocken (24, 25) während der relativen Drehbewegung zwischen den Abtrieben zu verhindern; und einem Torsionsreibungsantrieb /17 a, 18 a, 60 a, 61 a) zwischen jedem Kupplungsteil (19, 20) und dem zugehörigen Abtrieb (17, 18), um die Wiederherstellung des Antriebs auf den abgetrennten Abtrieb bei Wiederaufnahme der Synchrondrehung der Abtriebe zu unterstützen, dadurch gekennzeichnet, dass Reibkörper (60, 61) zur Drehung mit jedem Kupplungsteil (19, 20) achsial verschiebbar verbunden sind, wobei die Reibkörper koachsial innerhalb der Kupplungsteile angeordnet sind und durch Federspannung (62) achsial auseinander und in Reibungskontakt mit einer zugeordneten Reibfläche /17 a, 18 a) auf dem zugehörigen Abtrieb gehalten werden, wodurch der Torsionsreibungsantrieb hergestellt wird.

2. Fahrzeugdifferential nach Anspruch 1, dadurch gekennzeichnet, dass die Reibkörper (60, 61) und die Abtriebe (17, 18) mit zusammenwirkenden kegelstumpfförmigen Reibflächen (60 a, 61 a, 17 a, 18 a) versehen sind.

3. Fahrzeugdifferential nach Anspruch 1 oder 2, dadurch gekennzeichnet, dass die Verriegelungseinrichtung ein ring- oder buchsenförmiges Sperrglied (21) aufweist, welches in den Kupplungsteilen (19, 20) koachsial abgestützt und am Umfang mit zwei Reihen in Abständen voneinander angeordneten Riegelausbildungen (28, 29) versehen ist, welche jeweils in entsprechende Ausbildungen (26, 27) an den jeweiligen Kupplungsteilen eingreifen, wobei die Umfangsabstände zwischen benachbarten Ausbildungen am Sperrglied und an der Kupplungsteilen die maximal mögliche Relativdrehung zwischen den Kupplungsteilen begrenzen und damit die maximal mögliche Relativdrehung zwischen jedem Kupplungsteil und dem Eingangsteil steuern.

4. Fahrzeugdifferential nach Anspruch 3, dadurch gekennzeichnet, dass die Riegelausbildungen auf dem Sperrglied aus zwei Reihen am Umfang in Abständen angeordneter Nuten (28, 29) und die Riegelausbildungen an jedem Kupplungsteil aus am Umfang in Abständen angeordneten Sperrzähnen (26, 27) bestehen, welche in die Nuten eingreifen, wobei das relative Umfangsmass der Nuten und Zähne die maximal mögliche relative Drehbewegung zwischen den Kupplungsteilen bestimmt.

5. Fahrzeugdifferential nach Anspruch 3, dadurch gekennzeichnet, dass die Reibkörper (60, 61) mit den Sperrzähnen (26, 27) der Kupplungsteile (19, 20) verbunden sind.

6. Fahrzeugdifferential nah einem der Ansprüche 1 bis 5, dadurch gekennzeichnet, dass eine Einrichtung (28, 29, 26, 27) vorgesehen ist, welche die gleichzeitige Unterbrechung des Antriebs auf beide Abtriebe verhindert.

7. Fahrzeugdifferential nach Anspruch 4 bis 6, dadurch gekennzeichnet, dass das relative achsiale Mass der Nuten (28, 29) im Sperrglied (21) und der darin eingreifenden Sperrzähne (26, 27) an den Kupplungsteilen (19, 20) die minimal möglichen achsialen Abstände (W) zwischen den Sperrzähnen (26, 27) und damit den Kupplungsteilen (19, 20) begrenzt, wodurch diese am gleichzeitigen Unterbrechen des Antriebs auf den zugeordneten Abtrieb /17, 18) gehindert werden.

8. Fahrzeugachse, dadurch gekennzeichnet, dass ein Differential nach einem der Ansprüche 1 bis 7 zwischen den Rädern angeordnet ist, wobei jeder Abtrieb (17, 18) mit einer das jeweilige Rad antreibenden Welle (13, 14) verbunden ist.

**Revendications**

1. Mécanisme différentiel pour véhicule comprenant un élément d'entrée rotatif (16) pour accouplement avec des moyens d'entraînement; un élément rotatif de sortie de gauche (17) et un élément rotatif de sortie de droite (18) pour accouplement avec des composants (13, 14) à entraîner par le mécanisme, les éléments de sortie étant placés coaxialement, un de chaque côté de l'élément d'entrée; un élément d'embrayage rotatif de gauche (19) et un élément d'embrayage rotatif de droite (20) placés coaxialement, un de chaque côté de l'élément d'entrée (16), entre l'élément d'entrée et l'élément de sortie de gauche (17) et de droite (18) respectivement et qui peuvent coulisser par rapport à ceux-ci dans des directions parallèles audit axe de rotation, chaque élément d'embrayage comportant des premières (23) et des deuxièmes (24) configurations de came circonférentiellement espacées et axialement en saillie, pour l'enclenchement avec des premières (22) et des deuxièmes (25) configurations de came prévues sur les éléments d'entrée et de sortie (17, 18) respectivement, lesdites configurations de came étant profilées de manière à engendrer un déplacement axial de l'élément d'embrayage lors de la rotation relative entre les configurations de came en enclenchement mutuel; des moyens de blocage (21, 26, 27) pour déterminer le mouvement de rotation maximal possible des éléments d'embrayage (19, 20) par rapport à l'élément d'entrée; l'agencement étant tel que, lorsque les éléments de sortie (17, 18) tournent en synchronisme, les premières configurations de came (22, 23) obligent les deux ensembles de deuxièmes configurations de came (24, 25) à s'enclencher pour transmettre l'entraînement à chaque élément de sortie (17, 18) à partir de l'élément d'entrée (16), par l'intermédiaire des premières (22, 23) et des deuxièmes (24, 25) configurations de came, et lorsqu'une rotation relative se produit entre les éléments de sortie du fait de leur accouplement avec lesdits composants (13, 14), les deuxièmes configurations de came (24, 25) de l'élément de sortie qui tourne le plus vite provoquent un déplacement axial et angulaire de l'élément d'embrayage associé, de façon à interrompre l'entraînement entre les premières et deuxièmes configurations de came associées, pour supprimer l'entraînement entre l'élément d'entrée et l'élément de sortie qui tourne le plus vite, les moyens de blocage (21, 26, 27) limitant le déplacement en rotation desdits éléments d'embrayage (19, 20) afin d'empêcher le rétablissement du contact entre les premières configurations de came dissociées (24, 25) tant qu'une rotation relative se produit entre les éléments de sortie; et un entraînement par friction de torsion (17a, 18a, 60a, 61a) entre chaque élément d'embrayage (19, 20) et son élément de sortie associé (17, 18) pour aider à rétablir l'entraînement d'un élément de sortie débrayé, lors du rétablissement d'une rotation synchrone des éléments de sortie, le mécanisme différentiel étant caractérisé en ce qu'un élément de friction (60, 61) est relié de façon axialement coulissante par rotation avec chaque élément d'embrayage (19, 20), les éléments de friction étant disposés coaxialement à l'intérieur des éléments d'embrayage et étant rappelés élastiquement (62) de façon à s'écarter axialement l'un de l'autre et à venir en contact de friction avec une surface de friction correspondante (17a, 18a) prévue sur l'élément de sortie associé, pour fournir ledit entraînement de torsion par friction.

2. Mécanisme différentiel suivant la revendication 1, caractérisé en ce que les éléments de friction (60, 61) et les éléments de sortie (17, 18) présentent des surfaces de friction tronconiques coopérantes (60a, 61a, 17a, 18a).

3. Mécanisme différentiel suivant la revendication 1 ou la revendication 2, caractérisé en ce que les moyens de blocage comprennent un élément de blocage sous la forme d'un anneau ou d'un manchon (21) supporté coaxialement à l'intérieur des éléments d'embrayage (19, 20) et comportant deux séries de configurations de blocage circonférentiellement espacées (28, 29), chaque série respective de configurations s'accouplant avec un ensemble correspondant de configurations de blocage (26, 27) prévues sur un élément d'embrayage respectif, l'espacement circonférentiel entre les configurations de blocage adjacentes sur l'élément de blocage et sur les éléments d'embrayage limitant la rotation relative maximale possible entre les éléments d'embrayage et déterminant donc la rotation relative maximale possible entre l'un ou l'autre des éléments d'embrayage et l'élément d'entrée.

4. Mécanisme différentiel suivant la revendication 3, caractérisé en ce que les configurations de blocage de l'élément de blocage comprennent deux séries d'encoches circonférentiellement espacées (28, 29) et les configurations de blocage sur chaque élément d'embrayage comprennent des dents de blocage circonférentiellement espacées (26, 27) qui s'engagent dans les encoches, la longueur circonférentielle relative des encoches et des dents déterminant la rotation relative maximale possible entre les éléments d'embrayage.

5. Mécanisme différentiel suivant la revendication 3, caractérisé en ce que les éléments de friction (60, 61) sont connectés avec les configurations de blocage (26, 27) des éléments d'embrayage (19, 20).

6. Mécanisme différentiel suivant l'une quelconque des revendications 1 à 5, caractérisé en ce que des moyens (28, 29, 26, 27) sont prévus pour empêcher l'interruption simultanée de l'entraînement des deux éléments de sortie (17, 18).

7. Mécanisme différentiel suivant les revendications 4 et 6, caractérisé en ce que l'étendue axiale relative des encoches (28, 29) de l'élément de blocage (21) et des dents de blocage (26, 27) en saillie sur les éléments d'embrayage (19, 20) limite l'espacement axial minimal possible (W) entre les dents de blocage (26, 27) et donc entre les éléments d'embrayage (19, 20), de manière à empêcher que les deux éléments d'embrayage suppriment simultanément l'entraînement de leur élément de sortie associé (17, 18).

8. Essieu de véhicule, caractérisé en ce qu'un mécanisme différentiel suivant l'une quelconque des revendications 1 à 7 est employé comme différentiel entre roues, chaque élément de sortie (17, 18) étant accouplé à un arbre respectif (13, 14) d'entraînement de roue.

0 147 397

FIG.1

1

FIG.2

FIG. 3

FIG.4

FIG. 8

FIG.5

FIG.6

FIG.7

FIG.9

FIG.10